(19) Europäisches Patentamt

European Patent Office

Office européen des brevets

(11) EP 0 756 558 B1

(12) **EUROPÄISCHE PATENTSCHRIFT**

(45) Veröffentlichungstag und Bekanntmachung des Hinweises auf die Patenterteilung:
09.09.1998  Patentblatt 1998/37

(21) Anmeldenummer: 96903915.5

(22) Anmeldetag: 20.02.1996

(51) Int. Cl.$^6$: **B65B 3/34**, G05D 7/06

(86) Internationale Anmeldenummer:
PCT/DE96/00338

(87) Internationale Veröffentlichungsnummer:
WO 96/26111 (29.08.1996  Gazette 1996/39)

(54) **VERFAHREN UND EINRICHTUNG ZUM DOSIEREN FLIESSFÄHIGER MEDIEN**

PROCESS AND DEVICE FOR DOSING FREE-FLOWING MEDIA

PROCEDE ET DISPOSITIF DE DOSAGE DE SUBSTANCES COULANTES

(84) Benannte Vertragsstaaten:
**AT BE CH FR GB IT LI SE**

(30) Priorität: 22.02.1995 DE 19507817

(43) Veröffentlichungstag der Anmeldung:
05.02.1997  Patentblatt 1997/06

(73) Patentinhaber:
**Afuema Abfüllmaschinen GmbH**
**06862 Rosslau (DE)**

(72) Erfinder: **Schröder, Wolfgang**
**39118 Magdeburg (DE)**

(74) Vertreter: **Erich, Dieter**
**Patentanwalt**
**August-Bebel-Ring 36**
**15751 Niederlehme bei Berlin (DE)**

(56) Entgegenhaltungen:
EP-A- 0 426 266          EP-A- 0 444 269
WO-A-92/02787          US-A- 5 316 444

## Beschreibung

Die Erfindung betrifft ein Verfahren zum dosierten Einfüllen fließfähiger Medien in Behälter, bei dem die Zeit zum Ausfüllen des Volumens eines Füllrohres gemessen und im eingestellten Vergleich mit dem Volumen eines zu füllenden Gefäßes in ein zeitbestimmtes Verhältnis gebracht wird. Dabei wird die Zeit zum Ausfüllen des Füllrohres, beginnend beim Füllstart in Zeiteinheiten eingeteilt und beim Austritt des Mediums aus dem Füllrohr beendet. Die Basis zum Ausfüllen des Volumens des Füllrohres ist durch die Überlaufanordnung eines Niveaubehälters immer konstant gehalten. Die Einstellung der Viskosität wird separat außerhalb des Füllrohres vorgenommen. Weiterhin betrifft die Erfindung eine Einrichtung zur Durchführung des Verfahrens.

Aus der DD PS 297 123 ist es bekannt, daß die Basis zum Ausfüllen des Volumens des Füllrohres einer förderstromgesteuerten, viskositätsunabhängigen Füllmaschine durch eine Überlaufanordnung eines Niveaubehälters konstant gehalten wird. Dabei ist die Füllmaschine derartig ausgebildet, daß ein Füllrohr aus einem Pufferbehälter ragt, in dein ein Niveaubehälter angeordnet ist, in welchem das Füllrohr, mit einer Pumpe verbunden, in einem Füllmedienbad endet. Der Niveaubehälter weist ein gemeinsames Füllmedienbad auf, das durch ein kontinuierliches Überfüllen des Niveaubehälters mit dem Füllmedium, in einen kontinuierlichen Kreislauf gehalten wird. Am aufragenden Ende des Füllrohres ist eine durch Sensoren gebildete Schranke vorgesehen, die über ein Steuersignal mit einer Steuervorrichtung in Verbindung gebracht ist, welche über ein Ausgangssignal vor einem Schaltverstärker vorgesehen und verstärkt mit der Pumpe verbunden ist. Die Steuervorrichtung steht mit einem Positionssender über ein Steuersignal in einer Wirkverbindung. Das bekannte Verfahren sowie die Einrichtung haben den Nachteil, daß die Dosierung volumenabhängig vorgenommen wird. Dadurch ist ein Nachjustieren der Einrichtung während des Abfüllvorganges, vor allem bei Viskositätsschwankungen und unterschiedlichen Dichten des Füllmediums notwendig. Weiterhin ist zu verzeichnen, daß Ungenauigkeiten des dosierten Volumens durch Totzeiten der Volumensteuerung als Nachteil erkannt worden sind.

Der Erfindung liegt die Aufgabe zu Grunde, ein Verfahren und eine Einrichtung gemäß den Oberbegriffen der Ansprüche 1;4 und 5 zu schaffen, die ein genaues, automatisch gesteuertes Dosieren fließfähiger Medien in die dazugehörigen Behälter ermöglicht.

Erfindungsgemäß wird die Aufgabe für ein gattungsgemäßes Verfahren durch die kennzeichnenden Merkmale des Patentanspruchs 1 und für gattungsgemäße Einrichtungen zur Durchführung des Verfahrens durch die kennzeichnenden Merkmale der Patentansprüche 4 und 5 gelost. Weitere Merkmale sind in dem kennzeichnenden Teil des Patentanspruchs 6 enthalten. Nach dem Abschalten der Füllpumpe rückt das gefüllte Gebinde weiter, und im Fülltakt beginnt der verfahrensgemäße zeitgesteuerte Füllvorgang von neuem. Es ist eine Ausgestaltung des erfindungsgemäßen Verfahrens, wenn die Gesamtfüllzeit - $t_n$ - zusammenwirkend mit den Faktoren:

. In den Behälter einzufüllendes Volumen - **V** - des Füllmediums,

. Geschwindigkeit - **v** - des Füllmediums beim Passieren des Sensors an der Austrittsöffnung des Füllrohres,

. - **A** - als Querschnittsfläche des Füllrohres mit der Formel

$$t_n = \frac{V}{v \cdot A}$$

festgelegt wird.

Es ist eine weitere vorteilhafte Ausgestaltung der erfindungsgemäßen Lösung, daß mit einem analogen Geschwindigkeitssensor die Strömungsgeschwindigkeit Qv im Füllrohr gemessen wird. Beim Erreichen des an der Austrittsöffnung angeordneten Sensors wird die Füllzeit begonnen und im Zusammenhang mit der jetzt konstanten Strömungsgeschwindigkeit Qv und dem konstanten Volumen des Füllmediums bei gefüllten Behältern beendet. Es ist eine Ausbildungsform der erfindungsgemäßen Lösung, daß auf dem stetig in einem gleichen Niveau mit dem Füllmedium gefüllten Niveaubehälter ein Füllrohr angeordnet und mit einer Füllpumpe verbunden ist. Im Füllrohr unmittelbar über dem Niveau des Füllmediums im Niveaubehälter ist ein Strömungssensor angeordnet und mit einer Zeitsteuerung - SPS - bekannter Art verbunden. In der Zeitsteuerung ist der Soll-Wert der Strömungsgeschwindigkeit des Füllmediums eingespeichert. Mittels eines ständigen Vergleichs der Soll- und Ist-Werte der Strömungsgeschwindigkeit erfolgt eine Anpassung der Ist-Geschwindigkeit an die Größe des Soll-Wertes. Diese Anpassung wird durch eine Veränderung der Pumpendrehzahl vorgenommen, die ein verändertes Volumen abgibt und damit bei Beibehaltung der konstanten Voraussetzungen, wie gleicher Querschnitt des Füllrohres, die Strömungsgeschwindigkeit des Füllmediums neu einstellt. In Fortführung der erfindungsgemäßen Lösung ist der an der Austrittsöffnung des Füllrohres angeordnete Startsensor dann aktiviert, wenn der Füllstrom den Sensorbereich passiert. Da jetzt die Faktoren Strömungsgeschwindigkeit und Volumen in einer Zeiteinheit sowie der Querschnitt des Füllrohres konstant sind, braucht nur noch die Zeit gemessen werden, in der ein bestimmtes Volumen in einen Behälter eingefüllt wird. Das verfahrensgemäß und entsprechend der Einrichtung angepaßte, konzipierte Verfahren zur Zeitsteuerung von fließfähigen Medien beinhaltet den Vorteil einer absoluten Volumengenauigkeit. Da das Medium durch eine Vorbehandlung einen ständig gleichen Viskositätscharakter aufweist, ist eine kontinuierliche Strömungsgeschwindigkeit während eines Abfüllvorganges in einen Behälter garantiert. Weil der Vorgang zyklisch sowie sich bei jedem Abfüllvorgang wiederholend und selbst kontrollierend gestaltet ist, wird es vorteilhaft möglich, die zu füllenden Behälter, da die Parameter zur Meßgenauigkeit immer wiederholbar sind, mit genau der gleichen Menge eines Füllmediums auszufüllen.

Die Erfindung soll anhand eines Ausführungsbeispieles näher erläutert werden. In der zugehörigen Zeichnung zeigen:

Fig. 1: Die Durchführung des Verfahrens bei der Anwendung zum Einfüllen von Medien mit einem Schergefälle

Fig. 2: Die Durchführung des Verfahrens bei der Anwendung zum Einfüllen von Medien ohne Schergefälle

Fig. 3: Eine Darstellung des Verfahrensablaufes gem. Fig. 1 und 2

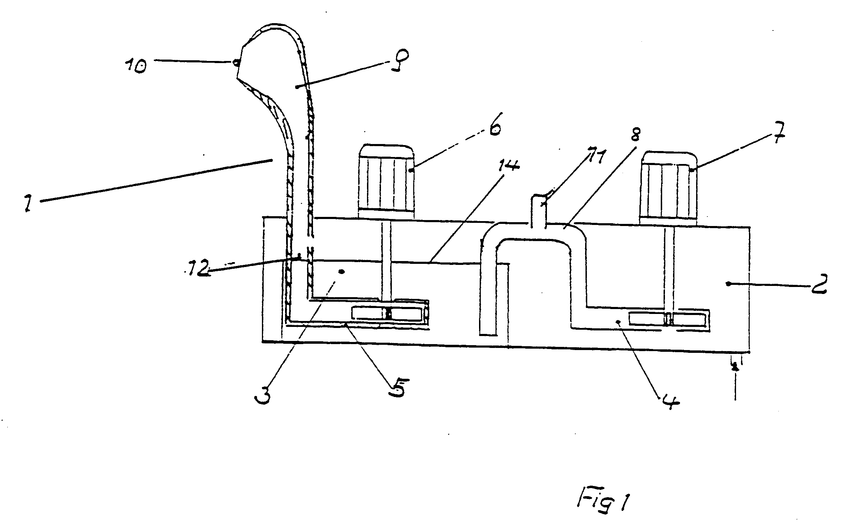

Nach Fig. 1 ist ein Füllautomat 1 aus einem Pufferbehälter 2, einem Niveaubehälter 3, einer Niveaupumpe 4 mit angeschlossener Druckleitung 8, die zum Boden des Niveaubehälters 3, einer Füllpumpe 5 mit angeschlossenem aufsteigendem Füllrohr 9 gebildet, an dem unmittelbar über dem Flüssigkeitsniveau 14 ein analoger Geschwindigkeitssensor 12 und am Auslaßende ein Startsensor 10 vorgesehen ist.

Das Auslaßende des aufsteigenden Füllrohres 9 ist so gestaltet, daß der Füllstrahl des abzufüllenden Mediums frei und sicher in die Füllöffnung des zu füllenden Gebindes fließt und ein sauberes und nachtropffreies Abfüllen gewährleistet.

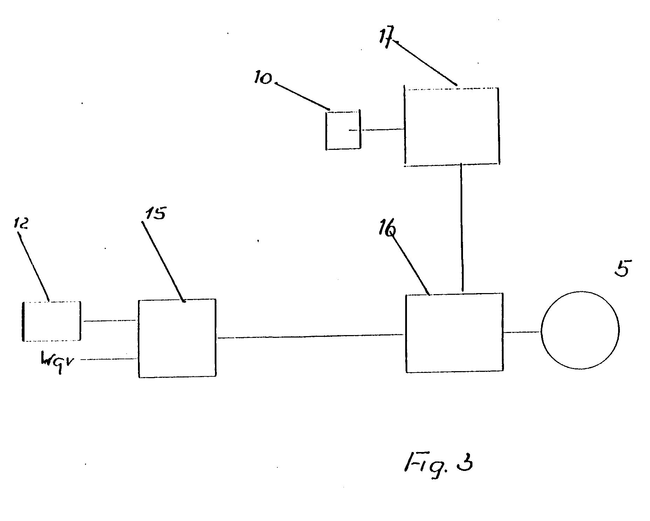

Deshalb wird in Übereinstimmung der Fig. 1 und 3 auf der Druckleitung 8 der Strömungssensor 11 zur Messung der Strömungsgeschwindigkeit Qv angeordnet. Der Strömungssensor 11 mißt ständig die Strömungsgeschwindigkeit Qv. Der Meßwert Xqv als Ist-Wert der Strömungsgeschwindigkeit Qv wird in einen Qv-Regler 15 eingelesen und mit einem Soll-Wert Wqv verglichen. Stimmen die Soll- und Ist-Werte überein, erfolgt keine Veränderung in einem Frequenzumrichter 16 und keine Drehzahländerung an die Niveaupumpe 4. Weichen die in der SPS-Einrichtung vorliegenden Soll- und Ist-Werte voneinander ab, wird ein Spannungssignal Uqv als Stellgröße der Qv-Regelung an den Frequenzumrichter 16 ausgegeben und die Drehzahl der Niveaupumpe 4 so lange verändert, bis die benötigte Strömungsgeschwindigkeit Qv erreicht ist. Damit wird eine hohe Konstanz des Ausgangsniveaus für die Füllpumpe gewährleistet. Bei einem Füllstart mißt der analoge Geschwindigkeitssensor 12 den Anstieg der Strömungsgeschwindigkeit im aufsteigenden Füllrohr 9. Dabei werden ständig die gemessenen Ist-Werte mit den im Qv-Regler 15 unterlegten Soll-Werten verglichen. Ist der Soll-Wert der Strömungsgeschwindigkeit im aufsteigenden Füllrohr 9 erreicht, dann wird über den Frequenzumrichter 16 die Drehzahl der Füllpumpe 5 konstant gehalten. Die Anordnung des Sensors 12 unmittelbar über dem Flüssigkeitsniveau 14 ist deshalb gewählt worden, um die Geschwindigkeit des Füllmediums unmittelbar nach Einschalten des Pumpenantriebes der Füllpumpe 5 erfassen zu können. Ist die Soll-Wert-Geschwindigkeit erreicht, dann wird deren Wert ständig konstant gehalten. Um ein sicheres Einregeln der Geschwindigkeit des aufsteigenden Füllmediums im Füllrohr 9 zu gewährleisten, wird das Füllrohr 9 mit seiner Länge so ausgebildet, daß die Sollgeschwindigkeit des Füllmedienstromes erreicht ist, bevor das Füllmedium am Startsensor 10 aus dem Füllrohr 9 austritt. Fließt das Füllmedium aus dem Füllrohr 9 aus, tritt es in den Wirkungsbereich des Startsensors 10 und aktiviert ihn. Ist der Sensor 10 aktiviert, wird durch ihn ein schneller Zähler 17 gestartet. Der Zähler 17 ist darauf eingestellt, daß nach Erreichen eines vorher festgelegten Volumens, in Abhängigkeit von der Zeiteinheit, die Pumpe 5 abgeschaltet wird. Es handelt sich hierbei um keine Volumendosierung, sondern durch das Vorhandensein eines konstanten Füllrohrquerschnittes einer genau eingeregelten, mit einem Soll-Wert in Übereinstimmung gebrachten Fließgeschwindigkeit des Füllstromes sowie das vorgegebene Füllvolumen, welches durch die jeweilige Größe des zu füllenden Behälters festgelegt ist. Dabei wird über eine genaue Zeitsteuerung der Füllzeit eine außerordentliche hohe Genauigkeit des Volumens erreicht. Aus dem konstanten Füllrohrquerschnitt, der eingeregelten Geschwindigkeit des Füllmediums im Zusammenhang mit dem einzufüllenden Volumen, ergibt sich zur Berechnung folgende Formel:

$$t_n = \frac{V}{v \cdot A} \ [s]$$

Dabei bedeuten:

$t_n$ = Gesamtfüllzeit [s]
$V$ = Vorgegebenes Volumen [cm$^3$]
$v$ = Geschwindigkeit [cm.s$^{-1}$]
$A$ = Querschnittsfläche des Füllrohres [cm$^2$]

Mit der Geschwindigkeitsregelung des Medienstromes werden im Ergebnis folgende Verfahrensschritte transparent:

1. Die Geschwindigkeit des Füllstrahles wird automatisch durch die Geschwindigkeitsmessung eingeregelt, damit erfolgt ein nachtropf- und spritzfreies Füllen.

2. Die Genauigkeit der Füllung wird erhöht, da durch die automatische Geschwindigkeitsregelung eine höhere Konstanz des Füllvolumens erzielt wird.

3. Fehlfüllungen, die durch Fehler bei der manuellen Eingabe der Werte für den Frequenzumrichter 16 auftreten können, werden verhindert.

Gemäß Fig. 1 wird nach dem Einschalten der Volumenfüllanlage beim Abschluß des Füllvorganges des Pufferbehälters 2 die Niveaupumpe 4 gestartet. Der von der Niveaupumpe 4 erzeugte Volumenstrom füllt den Niveaubehälter 3, der im Pufferbehälter 2 angeordnet ist. Der von der Niveaupumpe 4 erzeugte Volumenstrom bewirkt ein kontinuierliches, allseitiges Überfließen des zu füllenden Produktes über die Kanten des im Pufferbehälter 2 angeordneten Niveaubehälters 3. Der Niveaubellälter 3 ist so eingeordnet, daß das überfließende Medium allseitig über seine Kanten abfließen kann. Unmittelbar über dem Niveau im Niveaubehälter 3 ist am aufsteigenden Füllrohr 9 ein analoger Strömungssensor 12 angeordnet. Der Sensor 12 ist für die Messung der Strömungsgeschwindigkeiten im Bereich von 0 - 300 cm/s ausgelegt. Der Geschwindigkeitssensor 12 mißt in Übereinstimmung mit Fig. 3 kontinuierlich den Ist-Wert der Strömungsgeschwindigkeit Xqv, die im Qv-Regler 15 mit der Soll-Wert-Vorgabe der Strömungsgeschwindigkeit Wqv verglichen wird. Der Meßwert Xqv ist ein analoger Spannungswert, er kann je nach Geschwindigkeit eine Größe von 0 - 10 V annehmen. Allen analogen Spannungswerten ist eine Strömungsgeschwindigkeit zugeordnet. Die Füllpumpe 5 erzeugt nach Einschalten einen Volumenstrom, mit Zunahme der Geschwindigkeit einen größeren Volumenstrom. Die Soll-Wert-Vorgabe (Geschwindigkeitssollwert Wqv) ist 1,5 m/s. Im Qv-Regler 15 erfolgt nach Fig. 3 ein Spannungsabgleich. Dabei wird ein Spannungswert von z. B. 5 V an den Frequenzumrichter (FU 1) ausgegeben und die Ausgangsfrequenz so erhöht, daß die Drehzahl der Füllpumpe 5 auf die erforderliche Enddrehzahl von 900 U/min. erhöht wird. Die Füllpumpe 5 gleicht auch die scheinbare Zunahme der geodätischen Förderhöhe im Füllrohr 9 bei höheren Dichten derart aus, daß immer im Soll-Wert Wqv der Strömungsgeschwindigkeit Qv gefüllt wird. Dieser Ausgleich ist erforderlich, weil bei einer gewählten Pumpenleistung und einein vorhandenen Füllrohrquerschnitt ein Volumenstrom Q von mindestens 1 l/s erzeugt wird. Die Enddrehzahl der Füllpumpe 5 wird beiin gewählten Frequenzumrichter 16 nach ca. 0,1 s erreicht. Der Startsensor 10 darf erst dann aktiviert werden, wenn die Füllpumpe 9 sicher im Bereich der konstanten, eingeregelten Strömungsgeschwindigkeit arbeitet. Deshalb wird der Startsensor 10 so über dem Füllstand des Niveaubehälters 14 angeordnet, daß mit Sicherheit die zu durchlaufende Strecke für das Einregeln der Geschwindigkeit ausreicht. Der Sensor 10 wird erst dann aktiviert, wenn Geschwindigkeitsveränderungen des Füllstromes Q ausgeschlossen sind.

Die Anordnung nach den Fig. 1 und 3 wird gewählt, wenn viskose Füllmedien mit Schergefälle abgefüllt werden sollen. Dispersionen weisen ein ausgeprägtes Schergefälle auf. Als Beispiel soll Latex-Bindemittel genannt werden, deren Viskosität hier voll einem Anfangswert von z. B. 10 000 mPas durch Rühren auf einen Viskositätswert von ca. 1000 mPas abgebaut wird. Wird das Rühren unterbrochen, steigt der Viskositätswert rasch wieder an. In der Füllpumpe 5 erfolgt deshalb in den Füllpausen bei Stillstand des Pumpenläufers ein Wiederanstieg der Viskosität. Um den Wiederanstieg der Viskosität zu verhindern, wird sofort nach Pumpenstillstand die Pumpe 5 mit einer Drehzahl beaufschlagt, die so gewählt ist, daß sie unterhalb der förderwirksamen Drehzahl bleibt. Der Füllstand zwischen Niveaubehälter 3 und dem Füllgutniveau im Pufferbehälter 2 beträgt im allgemeinen 2 bis 3 cm. Hier kann also mit der baugleichen Niveaupumpe 4 mit geringeren Drehzahlen ein höherer Füllstrom Q erzeugt werden. Werden Medien abgefüllt, die kein Schergefälle besitzen, kann auf die Überlaufanordnung nach Fig. 1 verzichtet werden, da hierbei durch Rühren keine Viskositätsveränderungen auftreten.

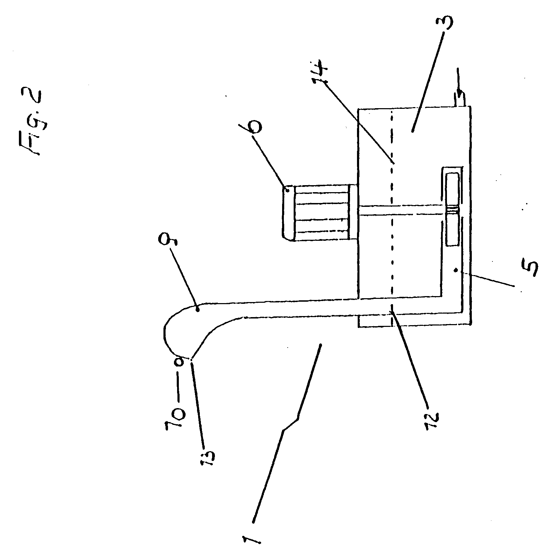

In den Fig. 2 und 3 soll diese Verfahrensweise näher erläutert werden. Gemäß Fig. 2 ist die Füllpumpe 5 direkt im Pufferbehälter 2 angeordnet. Am Füllrohr 9 sind in aufsteigender Richtung zuerst der Strömungssensor 12 und darüber der Startsensor 10 angeordnet. Wie in Fig. 2 dargestellt, mißt der Strömungssensor 12 die aktuelle Strömungsgeschwindigkeit des von der Füllpumpe 5 erzeugten Füllstromes Q. Im Qv-Regler 15 wird die gemessene Strömungsgeschwindigkeit mit dem Soll-Wert Wqv verglichen. Die gebildete Stellgröße Uqv wird unmittelbar an den Frequenzumrichter 16 der Füllpumpe 5 ausgegeben. Die Abstände zwischen dem die Strömung messenden Sensor 12 und dem Startsensor 10 sind so gewählt, daß eine eingeregelte konstante Strömung nach Soll-/Ist-Wertgleich und Erreichen des Soll-Wertes sowie Verstellung der Pumpendrehzahl erreicht ist, bevor der Startsensor 10 aktiviert wird. Dabei ist zu beachten, daß eine separate Niveauregelung der Konstanthaltung des Niveaus in Pufferbehälter 2 gewährleistet ist. Damit wird geregelt, daß eine vorausbestimmte Füllgeschwindigkeit erreicht wird und Niveauschwankungen, die zu einer Veränderung der Strömungsgeschwindigkeit Qv führen würden, ausgeschlossen sind. Beim Füllstart mißt der Sensor 12 die aktuelle Strömungsgeschwindigkeit, die von der Füllpumpe 5 erzeugt wird. Der Sensor 12 ist mit dem Qv-Regler 15 verbunden. In dem Qv-Regler 15 ist der Soll-Wert der Strömungsgeschwindigkeit Qv eingespeichert. Die durch den Strömungssensor 12 ermittelten Ist-Werte der Strömungsgeschwindigkeit Xqv werden dein Qv-Regler 15 übermittelt und in diesen mit den Soll-Werten Wqv verglichen. Der Vergleich erfolgt so lange, bis die Größe der ständig ermittelten Ist-Werte durch Steigerung der Pumpenleistung der Füllpumpe sich dem Soll-Wert Wqv angeglichen haben. Die Angleichung ist auf jeden Fall abgeschlossen, ehe das Füllmedium im Füllrohr den Startsensor 10 erreicht hat.

Beim Passieren des Startsensors 10 durch das Füllmedium wird dieser aktiviert und gibt einen Impuls an einen Zähler, der so lange die Zeitimpulse mißt, bis das vorgesehene Volumen in den Behälter eingefüllt ist. Nach Ablauf des Zeitintervalles zum Einfülten des Füllvolumens gibt der Zähler dem Frequenzumrichter 16 den Befehl zum Stoppen der Füllpumpe 5. Zum Füllen des nächsten Behälters wird das gleiche Zeitregime zur Wirkung gebracht. Die Zeit zum Füllen eines Behälters in der Größe 1000 ml beträgt ca. 1,4 s, so daß innerhalb von einer Minute inklusive der Behälterwechselzeiten ca. 30 Behälter der angegebenen Größe gefüllt werden können.

**Aufstellung der verwendeten Bezugszeichen**

| | |
|---|---|
| 1 | Füllautomat |
| 2 | Pufferbehälter |
| 3 | Niveaubehälter |
| 4 | Niveaupumpe |
| 5 | Füllpumpe |
| 6;7 | Motor |
| 8 | Druckleitung |
| 9 | Füllrohr |
| 10 | Startsensor |
| 11;12 | Strömungssensor |
| 13 | Auslauföffnung |
| 14 | Niveau |
| 15 | Qv-Regler |
| 16 | Frequenzumrichter |
| 17 | Zähler |
| Q | Füllstrom |
| Qv | Strömungsgeschwindigkeit |
| Xqv | Ist-Wert der Strömungsgeschwindigkeit |
| Wqv | Soll-Wert der Strömungsgeschwindigkeit |
| Uqv | Stellgröße |

**Patentansprüche**

1. Verfahren zum viskositätsunabhängigen und dosierten Einfüllen fließfähiger Medien in Behälter, bei dem die Zeit zum Ausfüllen des Volumens eines Füllrohres gemessen und im eingestellten Vergleich mit dem Volumen eines zu füllenden Gefäßes in ein zeitbestimmtes Verhältnis gebracht wird, wobei die Zeit zum Ausfüllen des Füllrohres beginnend beim Füllstart in Zeiteinheiten eingeteilt, und beim Austritt des Mediums aus dem Füllrohr beendet wird, wobei die Basis zum Ausfüllen des Volumens des Füllrohres immer konstant gehalten und die Einstellung der Viskosität separat außerhalb des Füllrohres vorgenommen wird, **dadurch gekennzeichnet, daß** das durch eine Füllpumpe bewegte Füllmedium in einem Füllmedienstrom an einem Strömungssensor vorbeifließt und dabei seine Strömungsgeschwindigkeit (Qv) gemessen und einem Qv-Regler übermittelt wird, in dem der gemessene Ist-Wert mit einem im Regler eingespeicherten Sollwert der Strömungsgeschwindigkeit (Qv) ständig verglichen und bis zum Erreichen der Größe des Sollwertes angepaßt wird, wobei die Einstellung der Strömungsgeschwindigkeit (Qv) bis zur Größe des Sollwertes vor dem Eintreffen des Füllstromes an der Austrittsöffnung abgeschlossen wird, und wenn der Füllstrahl aus dem Füllrohr austritt, dieser an einem an der Austrittsöffnung des Füllrohres angeordneten Sensor vorbeifließt, dessen Sensorbereich berührt und den Sensor aktiviert, wobei ein Impuls an einen Zähler zum Zahlen von Zeitimpulsen abgegeben wird, durch den ein Impuls einem Frequenzumrichter mitgeteilt wird, der die Zeit ermittelt, welche beim Erreichen eines Zeitgrenzwertes, der mit der genauen Füllmenge des Füllmediums im gefüllten Beälter übereinstimmt, die Füllpumpe abschaltet.

2. Verfahren nach Anspruch 1 **dadurch gekennzeichnet, daß** die Gesamtfüllzeit ($t_n$) im Zusammenwirken mit den Faktoren, in den Behälter einzufüllendes Füllvolumen -V- des Füllmediums; Strömungsgeschwindigkeit -v- des Füllmediums beim Passieren des Sensors an der Austrittsöffnung des Füllrohres und -A-als Querschnittsfläche des Füllrohres als Formel

$$t_n = \frac{V}{v \cdot A} \ [s]$$

festgelegt wird.

3. Verfahren nach Anspruch 1, **dadurch gekennzeichnet, daß** mit einem analogen Geschwindigkeitssensor die Strömungsgeschwindigkeit (Qv) im Füllrohr gemessen und bei Erreichen des an der Austrittsöffnung des Füllrohres angeordneten Sensors das Zählen der Füllzeit begonnen und im Zusammenhang mit der jetzt konstanten Strömungsgeschwindigkeit (Qv) und konstantem Füllmedium bei einer vollständigen Füllung eines Behälters zeitgesteuert beendet wird.

4. Einrichtung zur Durchführung des Verfahrens nach einem der Ansprüche 1 bis 3, mit einer Vorrichtung zum Aufstellen und Bewegen von Gefäßen sowie Abfüll- und Dosiervorrichtungen, bei der ein Füllrohr (9) aus einem Pufferbehälter (2) ragt, in dem ein Niveaubehälter (3) angeordnet ist, aus welchem, das Füllrohr (9) mit einer Pumpe (5) verbunden, in ein Füllmedienbad eingetaucht aufragt, wobei der Niveaubehälter mit dem Pufferbehälter ein gemeinsames Füllmedienbad aufweist, welches durch gleichmäßiges Überfüllen des Niveaubehälters mit dem Füllmedienbad in einem kontinuierlichen Kreislauf gehalten wird, und am aufragenden Ende des Füllrohres eine durch Sensoren (10) gebildete Schranke vorgesehen ist, die über ein Steuersignal mit einer Steuervorrichtung in Verbindung bringbar ist, welche über ein Ausgangssignal vor einem Schaltverstärker mit der Pumpe (5) verbunden ist, wobei die Steuervorrichtung mit einem Positionssender über ein Steuersignal in eine Wirkverbindung gebracht ist und wobei auf dem mit einem stetig gleichen Niveau (14) mit dem Füllmedium gefüllten Niveaubehälter (3) das Füllrohr (9) angeordnet und mit der Füllpumpe (5) verbunden ist, **dadurch gekennzeichnet, daß** im Füllrohr (9) über dem Niveau (14) des Füllmediums ein Strömungssensor (12) angeordnet und mit einer SPS-Einrichtung bekannter Art verbunden ist, die einen Sollwert der Strömungsgeschwindigkeit (Qv) gespeichert hält, daß der, mit dem durch den Sensor (12) gemessene Istwert der Strömungsgeschwindigkeit (Qv), in einem ständigen Soll-Ist-Wertvergleich der Zeitsteuerung, bis zum Erreichen eines an der Austrittsöffnung (13) des Füllrohres (9) angeordneten Startsensors (10) angepaßt und der Istwert der Strömungsgeschwindigkeit (Qv) mit dem Sollwert in Überdeckung gebracht und der Startsensor (10) über die Zeitsteuerung, verbunden mit einem Zahlwerk, durch den austretenden Füllstrahl aktiviert ist und bei Ablauf der Füllzeit durch eine Frequenzumwandlung mit der Füllpumpe (5) in Wirkkontakt gebracht, und damit die Füllpumpe (5) abgeschaltet wird.

5. Einrichtung zur Durchführung des Verfahrens nach einem der Ansprüche 1 bis 3, mit einer Vorrichtung zum Aufstellen und Bewegen von Gefäßen sowie Abfüll- und Dosiervorrichtungen, bei der ein Füllrohr (9) aus einem Pufferbehälter (2) ragt, aus welchem, das Füllrohr mit einer Pumpe (5) verbunden, in ein mit einem stetig gleichen Niveau gehaltenen Füllmedienbad eingetaucht aufragt und am aufragenden Ende des Füllrohres eine durch Sensoren (10) gebildete Schranke vorgesehen ist, die über ein Steuersignal mit einer Steuervorrichtung in Verbindung bringbar ist, welche über ein Ausgangssignal vor einem Schaltverstärker mit der Pumpe (5) verbunden ist, wobei die Steuervorrichtung mit einem Positionssender über ein Steuersignal in eine Wirkverbindung gebracht ist, **dadurch gekennzeichnet, daß** im Füllrohr (9) über dem Niveau (14) des Füllmediums ein Strömungssensor (12) angeordnet und mit einer SPS-Einrichtung bekannter Art verbunden ist, die einen Sollwert der Strömungsgeschwindigkeit (Qv) gespeichert hält, daß der, mit dem durch den Sensor (12) gemessene Istwert der Strömungsgeschwindigkeit (Qv), in einem ständigen Soll-Ist-Wertvergleich der Zeitsteuerung, bis zum Erreichen eines an der Austrittsöffnung (13) des Füllrohres (9) angeordneten Startsensors (10) angepaßt und der Istwert der Strömungsgeschwindigkeit (Qv) mit dem Sollwert in Überdeckung gebracht und der Startsensor (10) über die Zeitsteuerung, verbunden mit einem Zählwerk, durch den austretenden Füllstrahl aktiviert ist, und bei Ablauf der Füllzeit durch eine Frequenzumwandlung mit der Füllpumpe in Wirkkontakt gebracht, und damit die Füllpumpe (5) abgeschaltet wird.

6. Einrichtung nach den Ansprüchen 4 und 5, **dadurch gekennzeichnet, daß** der Startsensor (10) unmittelbar vor der Austrittsöffnung (13) des Füllrohres (9) angeordnet ist.

## Claims

1. A procedure for the dosed filling of free flowing media, irrespective of their viscosity, into containers in which the time for filling the volume of a filling pipe is measured and is brought by the set comparison into a time-determined relation with the volume of a vessel to be filled, in which the time for filling the filling pipe is divided into time units, commencing with the start of the filling and ending with the medium emerging from the filling pipe, in which the basis for filling the volume of the filling pipe is kept constant and the viscosity is separately adjusted outside of the filling pipe, **characterized in that** the filling medium moved by means of a filling pump flows past a flow sensor in form of a filling media flow from which the flow rate (Qv) is measured and transmitted to a Qv regulator, where the measured actual value is continuously compared with a set value of the flow rate (Qv) stored in the regulator and is adapted until the set value is reached, in which the adjusting process of the flow rate (Qv) to the set value is completed before the filling flow arrives at the outlet opening and upon the filling jet emerging from the filling pipe is flows past a sensor arranged at the outlet opening of the filling pipe, touching the sensor area and activating the sensor, through which a pulse is emitted to a counter for counting time pulses, through which a pulse is transferred to a frequency converter, establishing the time, which in turn switches off the filling pump upon reaching a time limit corresponding exactly to the filling quantity of the filling medium in the filled container.

2. A procedure according to claim 1, **characterized in that**, the total filling time ($t_n$) is determined in cooperation with the factors of the filling volume -V- of the filling media to be filled into the container; the flow rate of the filling media when passing the sensor at the outlet opening of the filling pipe and -A-, the cross-sectional area of the filling pipe in the formula

$$t_n = \frac{V}{v \cdot A} \ [s]$$

**3.** A procedure according to claim 1, **characterized in that**, the flow rate (Qv) in the filling pipe is measured with an analogue speed sensor and upon reaching the sensor arranged at the outlet opening of the filling pipe, the counting of the filling time being started and terminated in combination with the now constant flow rate (Qv) and constant filling medium upon the complete filling of a container.

**4.** An equipment for implementing the procedure according to one of the claims 1 to 3, including a device for setting up and moving vessels as well as filling and dosing devices in which a filling pipe (9) rises out of a buffer container (2) in which a leveling container (3) is arranged, from which the filling pipe (9), connected to a pump (5), submerged in a filling media bath, rises up, with the leveling container sharing with the buffer container a mutual filling medium bath which is maintained in a continuous circuit by aconstant overfilling of the leveling container with the filling medium bath, having at the rising end of the filling pipe a barrier formed by sensors (10) which can be connected via a control signal to a control device that is connected to the pump (5) by means of an output signal before a switching amplifier, in which the control device is operatively connected to a position transmitter by means of a control signal, and in which the filling pipe (9) is arranged at the leveling container (3), filled with the filling medium at a continuous even level (14), and connected to the filling pump (5), **characterized in that** a flow sensor (12) is arranged in the filling pipe (9) above the level (14) of the filling medium and is connected with a well-known PLC device, storing a set value of the flow rate (Qv), and that the actual value of the flow rate (Qv) is measured by the sensor (12) and adjusted in a constant set/actual value comparison by the time control until reaching a starting sensor (10) arranged at the outlet opening (13) of the filling pipe (9), and that the actual value of the flow rate (Qv) is adapted to the set value and the starting sensor (10) connected to the counter via a time control is being activated by the merging filling jet and coming into operative contact with the filling pump (5) through a frequency conversion at the end of the filling time and consequently switching off the filling pump (5).

**5.** An equipment for implementing the procedure according to one of the claims 1 to 3, including a device for setting up and moving vessels as well as filling and dosing devices in which a filling pipe (9) rises out of a buffer container (2) from which the filling pipe connected to a pump (5), submerged in a filling media bath which is kept permanently at the same level, rises up, having at the rising end a barrier formed by sensors (10) which can be connected via a control signal to a control device that is connected to the pump (5) by means of an output signal before a switching amplifier, in which the control device is operatively connected to a position transmitter by means of a control signal, **characterized in that** in the filling pipe (9) a flow sensor (12) is arranged above the level (14) of the filling medium and is connected with a well-known PLC device, storing a set value of the flow rate (Qv), and that the actual value of the flow rate (Qv) is measured by the sensor (12) and adjusted in a constant set/actual value comparison by the time control until reaching a starting sensor (10) arranged at the outlet opening (13) of the filling pipe (9), ad that the actual value of the flow rate (Qv) is adapted to the set value and the starting sensor (10) connected to the counter via a time control is being activated by the merging filling jet and coming into operative contact with the filling pump through a frequency conversion at the end of the filling time and consequently switching off the filling pump (5).

**6.** An equipment according to claims 4 and 5, **characterized in that** the starting sensor (10) is arranged directly in front of the outlet opening (13) of the filling pipe (9).

**Revendications**

**1.** Procédé pour le remplissage dosé et indépendant de la viscosité d'agents fluides dans des récipients, à l'occasion duquel le temps de remplissage du volume d'un tube de remplissage est mesuré et mis dans une certaine relation contrôlée avec le volume d'un récipient devant être rempli dans un certain intervalle de temps, le temps de remplissage du tube de remplissage étant divisé en unités de temps en commençant au début du remplissage et se terminant avec la sortie de l'agent hors du tube de remplissage, la base constituée par le remplissage du volume du tube de remplissage restant toujours constante , le réglage de la viscosité étant effectué séparément à l'extérieur du tube de remplissage, **caractérisé en ce que** l'agent de remplissage mis en circulation par une pompe de remplissage constitue un courant d'agent de remplissage passant devant un capteur de débit et que sa vitesse d'écoulement (Qv) est mesurée et transférée à un régulateur Qv dans lequel la valeur instantanée mesurée est comparée constamment avec la valeur de consigne de la vitesse d'écoulement (Qv) déposée dans le régulateur et est adaptée jusqu'à l'obtention de la valeur de consigne, le réglage de la vitesse d'écoulement (Qv) pour atteindre la valeur de consigne étant terminé avant l'arrivée du courant de remplissage à l'orifice de sortie et lorsque le courant de remplissage sort du tube de remplissage, il s'écoule devant un capteur disposé sur l'orifice de sortie du tube de remplissage, entre en contact avec la face active du capteur et active le capteur, une impulsion étant délivrée par un compteur pour compter les impulsions de temps, et transmettant l'impulsion à un redresseur de fréquence qui détermine le temps qui, lorsqu'une certaine limite de temps est atteinte coïncidant avec la quantité de remplissage exacte de l'agent de remplissage dans le récipient rempli, déconnecte la pompe de remplissage.

2. Procédé selon la revendication 1, **caractérisé en ce que** le temps total de remplissage ($t_n$) est donné par la formule

$$t_n = \frac{V}{v \cdot A} \text{ [s]}$$

en liaison avec les facteurs volume de remplissage -V- de l'agent de remplissage s'écoulant dans le tube de remplissage ; vitesse d'écoulement -v- de l'agent de remplissage au passage devant le capteur sur l'orifice de sortie du tube de remplissage et la section du tube de remplissage -A-.

3. Procédé selon la revendication 1, **caractérisé en ce que** la vitesse d'écoulement (Qv) dans le tube de remplissage est mesurée par un capteur de vitesse analogique et qu'à l'arrivée devant le capteur disposé sur l'orifice de sortie du tube de remplissage, le comptage du temps de remplissage commence et est terminé par synchronisation en relation avec la vitesse d'écoulement (Qv) désormais constante et pour un débit constant de l'agent de remplissage pour le remplissage complet d'un récipient.

4. Installation pour réaliser le procédé selon les revendications 1 à 3 avec un dispositif pour implanter et déplacer les récipients et avec des dispositifs de remplissage et de dosage, dans lequel un tube de remplissage (9) émerge d'un réservoir-tampon (2) dans lequel est placé un récipient de niveau (3), le tube de remplissage (9) étant raccordé à une pompe (5), et étant placé dans un bain de l'agent de remplissage, le récipient de niveau formant avec le réservoir-tampon un bain d'agent de remplissage commun qui est maintenu dans un circuit permanent par trop-plein du récipient de niveau dans le bain d'agent de remplissage, alors qu'à l'extrémité en saillie du tube de remplissage une barrière formée par des capteurs (10) est prévue, qui peut être mise en relation par un signal de commande avec un dispositif de commande qui est relié à la pompe (5) par un signal de sortie en amont d'un amplificateur de résonance, le dispositif de commande étant mis en relation avec un émetteur de position par un signal de commande, le tube de remplissage (9) étant disposé sur le récipient de niveau (3) maintenu constamment au même niveau (14) avec l'agent de remplissage et étant relié à la pompe de remplissage (5), **caractérisé en ce qu'**un capteur de débit (12) est installé dans le tube de remplissage (9) au-dessus du niveau (14) de l'agent de remplissage et est relié à une installation d'API de type connu qui garde en mémoire une valeur de consigne de la vitesse d'écoulement (Qv) qui adapte la valeur instantanée de la vitesse d'écoulement (Qv) mesurée par le capteur (12) par une comparaison constante consigne-réelle de la commande de synchronisation jusqu'à ce que le capteur de démarrage (10) installé à l'orifice de sortie (13) du tube de remplissage (9) fasse coïncider la valeur instantanée de la vitesse d'écoulement (Qv) et la valeur de consigne et que le capteur de démarrage (10) relié à la commande de synchronisation par un compteur est activé par le courant de remplissage à la sortie et est amené en contact actif avec la pompe de remplissage (5) par un convertisseur de fréquence au terme du temps de remplissage, entraînant la déconnexion de la pompe de remplissage (5).

5. Installation pour la réalisation du procédé selon l'une des revendications 1 à 3 avec un dispositif pour l'implantation et le déplacement de récipients et avec un dispositif de remplissage et de dosage dans lequel un tube de remplissage (9) émerge d'un réservoir-tampon (2), le tube de remplissage (9) étant raccordé à une pompe (5), et étant placé dans un bain de l'agent de remplissage maintenu constamment au même niveau alors qu'à l'extrémité en saillie du tube de remplissage une barrière formée par des capteurs (10) est prévue, qui peut être mise en relation par un signal de commande avec un dispositif de commande qui est relié à la pompe (5) par un signal d'un amplificateur de résonance, le dispositif de commande étant mis en relation avec un émetteur de position par un signal de commande, **caractérisé en ce qu'**un capteur de débit (12) est installé dans le tube de remplissage (9) au-dessus du niveau (14) de l'agent de remplissage et est relié à une installation d'API de type connu qui garde en mémoire une valeur de consigne de la vitesse d'écoulement (Qv) qui adapte la valeur instantanée de la vitesse d'écoulement (Qv) mesurée par le capteur (12) par une comparaison constante consigne-réelle de la commande de synchronisation jusqu'à ce que le capteur de démarrage (10) installé à l'orifice de sortie (13) du tube de remplissage (9) fasse coïncider la valeur instantanée de la vitesse d'écoulement (Qv) et la valeur de consigne et que le capteur de démarrage (10) relié à la commande de synchronisation par un compteur soit activé par le courant de remplissage à la sortie et soit amené en contact actif avec la pompe de remplissage, entraînant la déconnexion de la pompe de remplissage (5).

6. Installation selon les revendications 4 et 5, **caractérisée en ce que** le capteur de démarrage (10) est installé immédiatement devant l'orifice de sortie (13) du tube de remplissage (9).

EP 0 756 558 B1

Fig. 1

10

Fig. 2

Fig. 3